# EUROPEAN PATENT APPLICATION

(11) **EP 2 372 487 A2**
(43) Date of publication of application: **05.10.2011**
(21) Application number: 10197387.3
(22) Date of filing: 30.12.2010
(51) Int. Cl.: G05F 1/67, H02M 1/00

(54) **Solar light power generation system, control device, and control method thereof**

(30) Priority: 01.04.2010 CN 201010142337
(71) Applicant: Huawei Technologies Co., Ltd., Longgang District, Shenzhen Guangdong 518129 (CN)
(72) Inventor: Chen, Daoshen, 518129, Shenzhen (CN); Wei, Gang, 518129, Shenzhen (CN); Li, Quan, 518129, Shenzhen (CN)
(74) Representative: Barth, Stephan Manuel

(57) **Abstract**

A solar light power generation system, a control device, and a control method thereof are provided. The solar light power generation system includes: a solar cell array, configured to output multiple branches of electric energy; a combination control unit, configured to receive the multiple branches of electric energy output by the solar cell array, detect output characteristics of the multiple branches of electric energy, and adjust combination of series connection and/or parallel connection of the multiple branches of electric energy dynamically according to the output characteristics, so as to output one or more branches of electric energy; and an energy converting unit, configured to receive the one or more branches of electric energy output by the combination control unit, perform energy converting, and output the converted electric energy. The system adjust combination of the branches of electric energy, and can output electric energy with a better performance.

## Description

### FIELD OF THE INVENTION

The present invention relates to the field of solar energy technology, and in particular, to a solar light power generation system, a control device, and a control method thereof.

### BACKGROUND OF THE INVENTION

Currently, as a clean and renewable energy source, the solar energy is playing an increasingly important role nowadays when energy sources are insufficient around the world. Solar light power generation is a main manner to utilize the solar energy, and a basic principle is to convert light energy into electric energy by utilizing solar cells.

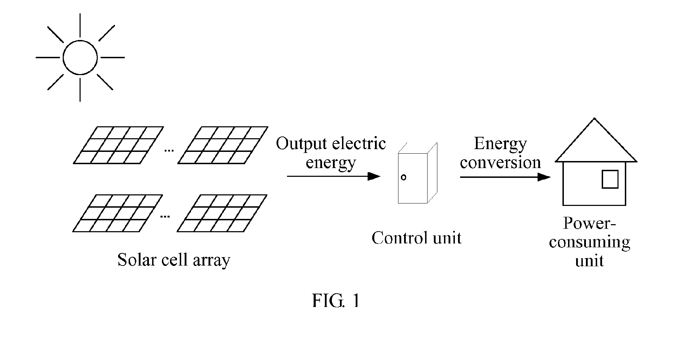

FIG. 1 is a schematic illustrative view of a solar light power generation system, which includes parts such as a solar cell array and a control unit. The solar cell array is configured to convert light energy into electric energy, and a solar cell is made of a material (such as a silicon compound) having a photovoltaic (PV) effect, and can convert the light energy into the electric energy. Since the conversion efficiency of the solar cell is lower, in order to achieve a large output power, a large number of solar cells are generally required to form the solar cell array to perform photoelectric conversion.

The control unit is configured to control the entire system, which includes receiving output electric energy of the solar cell array, performing energy conversion such as direct current-direct current (DC-DC) and direct current-alternating current (DC-AC), outputting the converted electric energy to a power-consuming unit (such as a household appliance, a factory, and a power grid). Moreover, the control unit is also configured to exercise other control of the system, such as control over monitoring and management of the system.

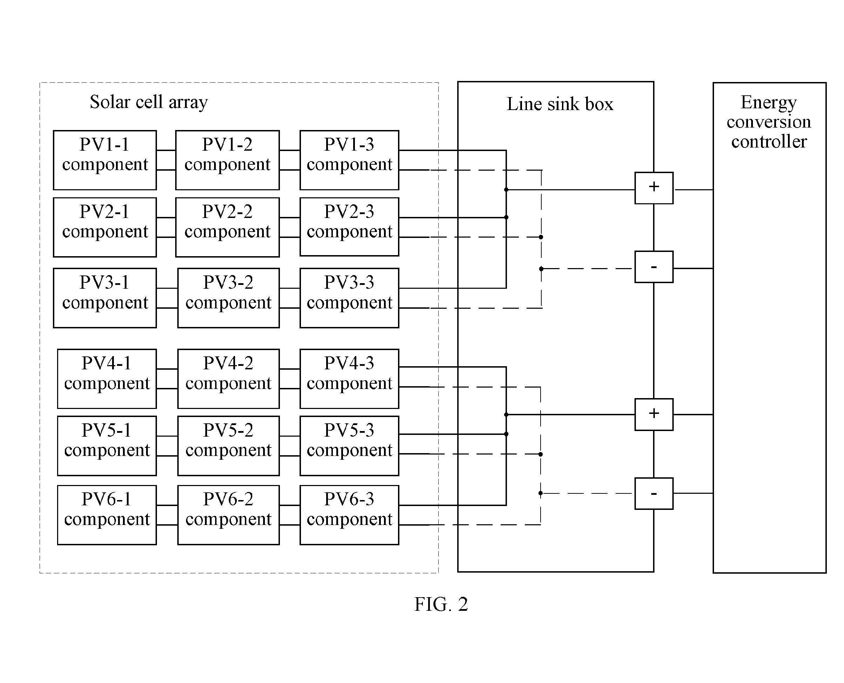

FIG. 2 is a schematic structural view of a widely used solar light power generation system in the prior art. The system includes such units as a solar cell array, a line collecting box, and an energy conversion controller. The most basic unit of the solar cell array is a solar cell (not shown), and a plurality of solar cells forms a solar PV component (such units as PV1-1 and PV3-2 in FIG. 2). A plurality of PV components forms the solar cell array.

The line collecting box and the energy conversion controller are equivalent to the control unit in FIG. 1. The line collecting box is configured to converge outputs of the solar cell array, and output the converged power supply to the energy conversion controller. According to a design requirement of the system, in the solar cell array, a plurality of PV components can be connected in series into one branch to output a required voltage, and multiple branches of PV components connected in series can be connected in parallel to output a required current. For example, in FIG. 2, the line collecting box connects a first branch, a second branch, and a third branch of PV components in parallel and then outputs as one branch (the first-branch corresponds to PV1-X in the drawing, X denotes a natural number, and the rest several branches are similar to the first-branch); and a fourth branch, a fifth branch, and a sixth branch of PV components are connected in parallel to be output as another branch.

The energy conversion controller is configured to receive outputs of the line collecting box and perform energy converting such as DC-DC conversion or DC-AC conversion, so as to output a voltage required by the power-consuming unit.

The prior art has at least the following disadvantages:

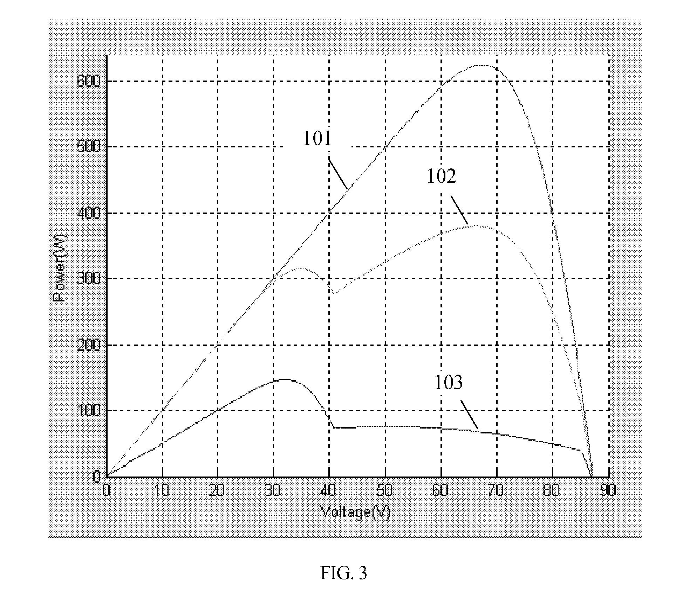

In the solar light power generation system shown in FIG. 2, if one or more solar cells in a PV component are sheltered by an object, a power output of the entire PV component is influenced greatly. FIG. 3 is a schematic view of a power output of a PV component with a solar cell sheltered. In the drawing, a horizontal axis denotes an output voltage of the PV component, and a vertical axis denotes a power of the PV component. A curve 101 is a power output curve during normal working, and curves 102 and 103 are output curves when different positions are sheltered. Taking an output voltage of 60 V as an example, the curve 101 during the normal working is capable of achieving an output power of about 590W at the time of outputting 60V; the curve 102 with shelter problem is only capable of achieving about 360W at 60V; and the another curve 103 with shelter problem (a shelter position of which is different from that of the curve 102) is only capable of achieving about 80W. Hence, when a solar cell in the PV component is sheltered, a performance of the entire component is influenced. If one solar cell is completely sheltered, power loss of the entire PV component becomes larger (above 50%); and furthermore, an output of a plurality of PV components connected in series and an output of a plurality of PV components connected in series and then connected in parallel are influenced (the output characteristics are similar to that in FIG. 2); as a result, a power output of the entire array is reduced.

Moreover, if shadow shelter exists, or the light is weak, the energy conversion controller cannot work due to an excessively low output voltage of the PV component, so as to cause electric energy waste.

### SUMMARY OF THE INVENTION

Accordingly, the present invention is directed to a solar light power generation system, a control device, and a control method thereof, capable of realizing an electric energy output with a better performance.

An embodiment of the present invention provides a solar light power generation system, where the system includes:
a solar cell array, configured to output multiple branches of electric energy;
a combination control unit, configured to receive the multiple branches of electric energy output by the solar cell array, detect output characteristics of the multiple branches of electric energy, and adjust combination of series connection and/or parallel connection of the multiple branches of electric energy dynamically according to the output characteristics, so as to output one or more branches of electric energy; and
an energy converting unit, configured to receive the one or more branches of electric energy output by the combination control unit, perform energy converting, and output the converted electric energy.

An embodiment of the present invention provides a control device of a solar light power generation system, configured to control a solar cell array to output electric energy, where the device includes:
a detecting unit, configured to receive multiple branches of electric energy output by a solar cell array, and detect characteristics of the multiple branches of electric energy;
a switch component, configured to combine the series and parallel connections of multiple branches of electric energy; and
a combination processing unit, configured to control the switch component to adjust combination of series connection and/or parallel connection of the multiple branches of electric energy dynamically according to the characteristics of the multiple branches of electric energy detected by the detecting unit, so as to output one or more branches of electric energy.

An embodiment of the present invention provides a control method of a solar light power generation system, where the system includes:
receiving multiple branches of electric energy output by a solar cell array, and detecting characteristics of the multiple branches of electric energy; and
adjusting combination of series connection and/or parallel connection of the multiple branches of electric energy dynamically according to the detected characteristics of the multiple branches of electric energy, so as to output one or more branches of electric energy.

According to embodiments of the present invention, characteristics of electric energy output by the solar cell array are detected, the combination of series connection and/or parallel connection of the multiple branches of electric energy is adjusted dynamically according to the characteristics of the electric energy, and the energy converting unit performs energy converting, so that various cases occurring in the system can be addressed by dynamical adjustment of combination, so as to obtain output electric energy with a better performance.

### BRIEF DESCRIPTION OF THE DRAWINGS

To make the technical solution under the present invention clearer, the accompanying drawings for illustrating the embodiments of the present invention or the prior art are outlined below. Apparently, the accompanying drawings are only for the exemplary purpose, and person having ordinary skill in the art can derive other drawings from such accompanying drawings without any creative effort.
FIG. 1 is a schematic view of a working principle of a solar light power generation system;
FIG. 2 is a schematic structural view of an existing solar light power generation system;
FIG. 3 is a schematic view of a power output of a PV component at different output voltages during normal working and when solar cells are sheltered in an existing solar light power generation system;
FIG. 4 is a schematic structural view of a solar light power generation system according to an embodiment of the present invention;
FIG. 5 is a schematic view of connecting input electric energy through a switch according to an embodiment of the present invention;
FIG. 5A is a schematic view of connecting input electric energy in series through a switch according to an embodiment of the present invention;
FIG. 5B is a schematic view of connecting input electric energy in parallel through a switch according to an embodiment of the present invention;
FIG. 6A is a schematic view of adjusting combination of input electric energy with similar characteristics according to an embodiment of the present invention;
FIG. 6B is a schematic view of adjusting combination of input electric energy with a failure according to another embodiment of the present invention;
FIG. 6C is a schematic view of connecting input electric energy in parallel according to another embodiment of the present invention;
FIG. 7A is a schematic structural view of an energy converting unit according to another embodiment of the present invention;
FIG. 7B is a schematic structural view of another energy converting unit according to another embodiment of the present invention;
FIG. 8 is a schematic structural view of a solar light power generation system according to another embodiment of the present invention;
FIG. 8A is an equivalent schematic view of a switch part according to another embodiment of the present invention;
FIG. 9A is a schematic view of adjusting combination of input electric energy with similar characteristics according to another embodiment of the present invention;
FIG. 9B is a schematic view of adjusting combination of input electric energy with a failure according to another embodiment of the present invention;
FIG. 9C is a schematic view of connecting input electric energy in series according to another embodiment of the present invention;
FIG. 9D is a schematic view of connecting input electric energy in parallel according to another embodiment of the present invention;
FIG. 10 shows two equivalent connection methods of a series connection circuit shown in FIG. 9C;
FIG. 11 is a schematic structural view of a control device of a solar light power generation system according to an embodiment of the present invention; and
FIG. 12 is a schematic flow chart of a control method of a solar light power generation system according to an embodiment of the present invention.

### DETAILED DESCRIPTION OF THE EMBODIMENTS

For better understanding of the objective, technical solution and merits of the present invention, the present invention is hereinafter described in detail with reference to specific embodiments and relevant accompanying drawings.

### Embodiment 1

The embodiment of the present invention provides a solar light power generation system, which is configured to obtain an electric energy output with a better performance by adjusting combination of the output of the solar cell array dynamically; the system includes a solar cell array, a combination control unit, and an energy converting unit.

The solar cell array is configured to output multiple branches of electric energy;
the combination control unit is configured to receive the multiple branches of electric energy output by the solar cell array, detect output characteristics of the multiple branches of electric energy, and adjust combination of series connection and/or parallel connection of the multiple branches of electric energy dynamically according to the output characteristics, so as to output one or more branches of electric energy; and
the energy converting unit is configured to receive one or more branches of outputs from the combination control unit, perform energy converting, and output the electric energy after the energy conversion.

Each branch of output of the solar cell array is output by a plurality of PV components connected in series, or is output by a plurality of groups of PV components connected in series after parallel connection. By connecting the PV components in series, an output voltage can be increased; by connecting the PV components in parallel, an output current can be increased; and during parallel connection, in order to guarantee a reliability of the performance, several types of PV components with the same characteristics need to be selected to be connected in parallel.

In the embodiment of the present invention, the process that the combination control unit adjust combination of series connection and/or parallel connection of the multiple branches of electric energy dynamically according to the output characteristics, so as to output one or more branches of electric energy, includes at least one of the following:
multiple branches of electric energy of similar performance are connected in parallel into one branch to be output; or
an electric energy output with a failure is cut off; or
multiple branches of electric energy are connected in series into one branch to be output.

Specifically, the adjustment can be performed according to various application situations. For example, when the PV components are sheltered, one or more branches of PV components being sheltered are output as one branch; or when short circuit occurs, the short-circuited branch of electric energy is cut off; or in a case of faint light, multiple branches of electric energy are connected in series into one branch to be output, so that the solar light power generation system obtains the output electric energy with the better performance.

It is noted that, the "series connection and/or parallel connection" means series connection or parallel connection, or series connection and parallel connection. Hereinafter, for ease of description, the "series-parallel connection" is also configured to denote series connection and/or parallel connection. If it is not specially illustrated, both of the two refer to the same meaning, and are not strictly distinguished.

Specifically, in the embodiment of the present invention, the combination control unit includes a detecting unit, a switch component, and a processing unit.

The detecting unit is configured to receive the multiple branches of electric energy output by the solar cell array, and detect the characteristics of the multiple branches of electric energy, in which content to be detected includes voltage and current; and it is determined that whether the characteristics of each branch of electric energy are similar or whether a failure occurs through values of the voltage and the current.

The switch component is configured to combine the series-parallel connection of the multiple branches of electric energy, in which the switch component specifically can include a plurality of switch units, and each switch unit can be such parts having switch characteristics as a Metal Oxide Semiconductor (MOS) tube, or an Insulated Gate Bipolar Transistor (IGBT) part, or a controllable relay.

The processing unit is configured to control the switch component to adjust combination of series connection and/or parallel connection of the multiple branches of electric energy dynamically according to the output characteristics of the multiple branches of electric energy detected by the detecting unit, so as to output one or more branches of electric energy.

In order to timely make a response to various states occurring in the system, a time interval by which the processing unit performs dynamic combination and adjustment should be smaller, so as to perform one time of adjustment every other 1 second or 2 seconds.

In the embodiment of the present invention, the energy converting unit includes one or more converting modules, and each converting module includes one or more converting channels. During design, symmetric design can be adopted, that is, conversion capabilities of the converting modules are the same; or asymmetric design can also be adopted, that is, a plurality of converting modules or converting channels having different capabilities is adopted, and electric energy to be converted is allocated in a fixed proportion according to a conversion capability of each converting module or converting channel. For example, more input electric energy is allocated to a module or channel with a strong conversion capability, and less input electric energy is allocated to a module or channel with a weak conversion capability. Through allocation in a proportion, a load borne by each converting module or converting channel may not be excessively large or small, so that the system load is more balanced.

When the electric energy to be converted is less, one or more converting modules or converting channels without the necessity for participating conversion are switched off For example, if one small module is capable of processing all conversion functions, the electric energy to be converted can be connected to the small module, and the module or channel without the necessity for participating the conversion is switched off (or sleeps), so as to reduce power consumption of the system.

According to the embodiment of the present invention, the combination control unit detects the characteristics of the multiple branches of electric energy output by the solar cell array, enables multiple branches of electric energy having similar characteristics to be connected in parallel as one branch to be output according to the characteristics of the multiple branches of electric energy, and cuts off the electric energy with a failure, so that an influence caused by problematic electric energy on the entire electric energy can be avoided. Meanwhile, multiple branches of electric energy can be further connected in series, so that the solar light power generation system according to the embodiment of the present invention can also output a voltage required by the system under such conditions as faint light, so as to increase a light energy utilization.

Moreover, according to the embodiment of the present invention, the energy converting unit designs the energy conversion module or converting channel in a symmetric or asymmetric manner. When the electric energy to be converted is less, one or more converting modules or converting channels without the necessity for participating conversion are switched off, and the power consumption of the system can be reduced.

### Embodiment 2

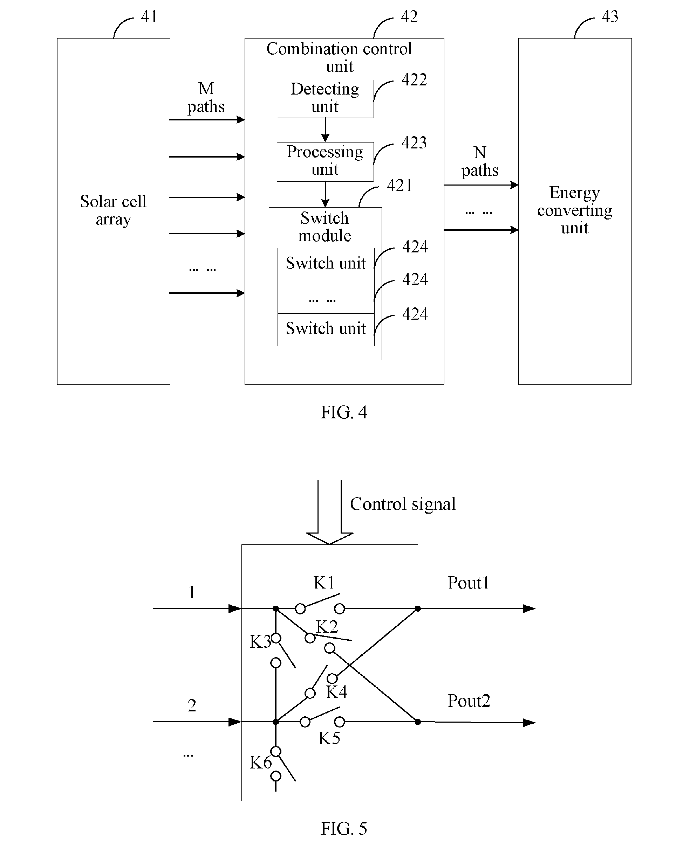

The embodiment of the present invention provides a solar light power generation system, which is configured to increase an energy conversion efficiency. Referring to FIG. 4, the solar light power generation system includes a solar cell array 41, a combination control unit 42, and an energy converting unit 43. The solar cell array 41 outputs M branches of electric energy to the combination control unit, after dynamically combining and controlling the M branches of electric energy, the combination control unit outputs N branches of electric energy to the energy converting unit, and after performing energy conversion, the energy converting unit outputs the electric energy to a power-consuming unit. Here, M generally is larger than N. For example, M generally is larger than 4, while N generally is 2 or 3.

Specifically, the solar light power generation system according to the embodiment of the present invention includes a solar cell array 41.

The solar cell array 41 is configured to output one or more branches of electric energy.

The most basic unit in the solar cell array is a solar cell, and the solar cell is made of a material having a photovoltaic effect, and can convert light energy into electric energy. Because electric energy output by a single solar cell is smaller, in order to satisfy a large output electric energy demand, a plurality of solar cells needs to be connected in series to form a PV component (or referred to as a solar cell component). Meanwhile, in order to achieve a more electric energy output, a plurality of PV components can be connected in series to increase a single-branch output voltage; and multiple branches of PV components (each branch has one PV component or a plurality of PV components connected in series) are connected in parallel to increase an output current.

At the time of performing a multiple branches of output, output voltages of branches can be the same or different. For example, in a first branch, two PV components are connected in series, so as to output a voltage of 96V (each PV component outputs 48V), and in a second branch, three PV components are connected in series, so as to output a voltage of 144V. When a current output by the first branch is insufficient, the output current can be increased by connecting the first branch in parallel with a branch of PV components with an output voltage of 96V. In an actual application, the solar cell array generally adopts PV components with the same specification, so that if the first branch needs to increase the output current, it can be realized by connecting the first branch in parallel with one branch being completely the same as itself. It is noted that, an output rated value (such as 48 V) of each PV component is an output in a specific lighting case, which does not represent that the output is always 48V in any lighting case. For example, when it is cloudy and rainy, early in the morning, or nightfall with weaker lighting, the value is not achieved, while at a summer noon with sufficient lighting, the output is above the value. Hence, in a working procedure, an output voltage of a PV component is one dynamically changing value, but as long as the voltage falls within a range (such as 90V to 110V) required by the backend energy converting unit, energy conversion can be performed on the output electric energy, and then the output electric energy is output.

The solar light power generation system according to the embodiment of the present invention further includes a combination control unit 42.

The combination control unit 42 is configured to receive the multiple branches of electric energy output by the solar cell array, detect output characteristics of the multiple branches of electric energy, and adjust combination of series connection and/or parallel connection of the multiple branches of electric energy dynamically according to the output characteristics, so as to output one or more branches of electric energy.

Referring to FIG. 4, the combination control unit includes a switch module 421, a detecting unit 422, and a processing unit 423. The switch module 421 is formed by a plurality of switch units, and each switch unit is formed by a component having switch characteristics, such as an MOS tube, an IGBT component, or a controllable relay. The component includes one control end, which can be configured to control whether the component is on or off, so as to realize an effect being similar to the effect of one switch. In an actual application procedure, a suitable switch part can be selected according to performance parameters of the system, or a design demand of the system is satisfied by combining a driving circuit.

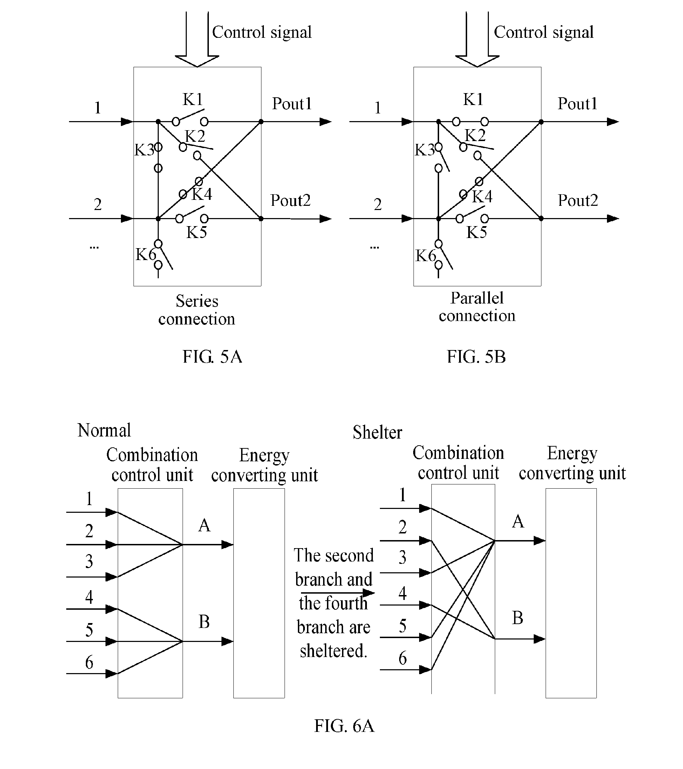

FIG. 5 is a schematic view of combining the series-parallel connections of the input electric energy by utilizing a plurality of switch units. A switch unit K3 is configured to determine whether the first branch and the second branch are connected. K1, K2, K4, and K5 are configured to determine whether the first branch and the second branch are output to corresponding output ends (Pout1 and Pout2), and each switch unit receives a control signal from the processing unit, so as to determine whether to switch on or switch off.

By setting a plurality of switch units, inputs of the multiple branches of electric energy are connected through series-parallel connection, so that the multiple branches of electric energy are not only capable of increasing an output voltage through series connection, but also are capable of increasing an output current through parallel connection.

FIG. 5A denotes a schematic view in which the first branch and the second branch are connected in series and are output from the Pout1 end. K3 and K4 are switched off through control of a control signal, the rest switches are switched on, and the first branch and the second branch can be connected in series, and then are output from the Pout1 end.

FIG. 5B denotes a schematic view in which the first branch and the second branch are connected in parallel and are output from the Pout2 end. K1 and K4 are switched off through control of a control signal, the rest switches are switched on, and the first branch and the second branch can be connected in parallel, and then are output from the Pout1 end.

The detecting unit 422 is configured to receive the multiple branches of electric energy output by the solar cell array, and detect output characteristics of branches of electric energy, such as detect whether the characteristics of the branches are similar, whether the branches are open-circuited, and whether the branches are short-circuited by detecting a voltage and a current.

The processing unit 423 is configured to obtain the output characteristics of the branches of electric energy output by the detecting unit, and adjust combination of series connection and/or parallel connection of the multiple branches of electric energy dynamically according to the output characteristics of the multiple branches of electric energy detected by the detecting unit, so as to output one or more branches of electric energy. In order to better make a response to a state occurring in the system, the adjustment is performed dynamically in real time. In every other fixed time (such as 500 milliseconds, 1 second, and 2 seconds), by actively obtaining information detected by the detecting unit or receiving information reported by the detecting unit, the processing unit obtains the output characteristics of the branches of electric energy, determines a state which the solar cell array is in (such as performances of certain branches are reduced, or a failure occurs in several branches), adjust combination of series connection and/or parallel connection of the multiple branches of electric energy dynamically according to the state.

For specific circuit implementation, the processing unit 423 can be realized by adopting a chip or hardware circuit having a processing function, such control chips as a Central Processing Unit (CPU), a Micro Controller Unit (MCU), and a Digital Signal Processor (DSP) or a hardware circuit having a similar function.

It is noted that, the detecting unit 422 and the processing unit 423 are not strictly distinguished. In an actual application procedure, two units can use the same processing chip, such as, commonly use the same CPU chip. Some pins of the chip are used as an input of the detecting unit, while some other pins are used as an output of the processing unit. Moreover, when the processing chip is configured to perform detection and control, because the chip generally adopts a digital level (a voltage thereof is smaller, such as 3V to 5V) and is incompatible with an output level (a voltage thereof is larger, such as dozens of volts to hundreds of volts) of the solar cell array, the output level of the solar cell array needs to be converted into a level with which the processing chip is capable of being compatible through a relevant processing circuit, such as an amplitude limitation conditioning circuit (such as resistance drop-voltage). Design of the processing circuits is a technology well known by persons skilled in the art, and is not recited any more here.

The processing unit 423 adjusts combination of series connection and/or parallel connection through control switch units. Specifically, the control end of the control switch unit is controlled to get characteristics of "on" or "off'; then the branch of electric energy is enable to output or cut off, or the connection relationships of the series-parallel connection are combined.

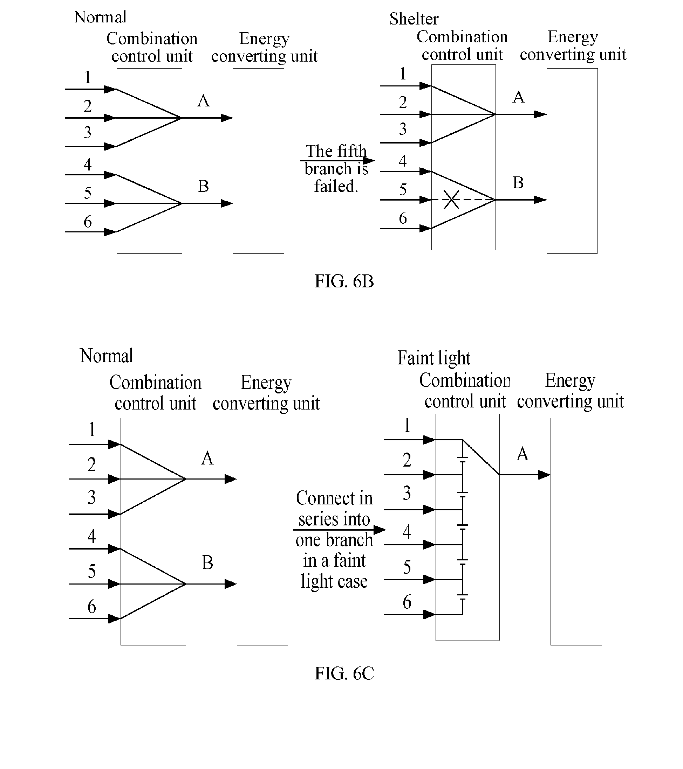

Referring to FIGs. 6A, 6B, and 6C, when the processing unit 423 adjusts combination of series connection and/or parallel connection of multiple branches of electric energy dynamically, at least one of the following exists.

### (1) Multiple branches of electric energy of similar performance are connected in parallel into one branch to be output.

The case is generally applied in a case in which solar cells in certain PV components are sheltered. Referring to FIG. 6A, a left drawing is a schematic view during normal working, in which arrows denoted by digitals 1 to 6 denote the multiple branches of electric energy output by the solar cell array, and arrows denoted by letters A and B denote multiple branches of electric energy output to the energy converting unit after the combination control unit adjusts combination of series connection and/or parallel connection of multiple branches of electric energy dynamically During normal working, the combination control unit connects a first branch, a second branch, and a third branch of input electric energy in parallel into one branch to be output to the energy converting unit, and connects a fourth branch, a fifth branch, and a sixth branch of input electric energy in parallel into one branch to be output to the energy converting unit.

It is assumed that, in a use procedure, if PV components in the second branch and the fourth branch are sheltered (such as, are sheltered by leaves, stones, animal excrement, and animal corpses), output characteristics of the branches are changed (for example, voltage and current values are reduced). In this case, output electric energy of the branches needs to be adjusted, and several branches of output electric energy with similar characteristics are output as one branch. Referring to a right drawing in FIG. 6A, in a case that the second branch and the fourth branch are sheltered, the second branch and the fourth branch are connected in parallel as one branch to be output; and the first branch, the third branch, the fifth branch, and the sixth branch are connected in parallel as one branch to be output. The second branch and the fourth branch are in a case that PV components are sheltered, and have similar characteristics of the electric energy; and the first branch, the third branch, the fifth branch, and the sixth branch are all in a normal working state, and have similar characteristics of the electric energy.

"Similar" mentioned here can be understood as similar within a certain error. For example, according to a requirement of system design parameters, 100V can be considered to be similar to 98V, 95V, and 102V; or within another error range, 100V is considered to be similar to 90V and 110V.

The electric energy with similar characteristics is connected in parallel as one branch to be output, so as to reduce a power loss due to parallel connection of tributaries with dissimilar characteristics.

### (2) An electric energy output with a failure is cut off.

The failure mentioned here includes such cases as short circuit, open circuit, and a seriously insufficient voltage or current. In a case that a failure occurs in a PV component, output, stability, and security of the entire system are all influenced. Hence, it is necessary to detect whether a failure occurs for each branch of electric energy in real time. If an abnormal case is detected, such abnormal cases as an excessively large current or excessively small voltage, the branch of electric energy needs to be cut off from the combination control unit, thereby avoiding the influence on the entire system.

Further, a short-circuit protection circuit can be further set on hardware, thereby avoiding the influence on the entire system.

Referring to FIG. 6B, a left drawing is a schematic view during normal working of the system, and a right drawing is a schematic view that when a failure occurs in the fifth branch, the fifth branch is disconnected from the combination control unit.

In the embodiment of the present invention, when finding out that the output electric energy is failed, the control unit may notify relevant maintenance personnel of failure information in various communication manners (including wired communication or wireless communication), so that after obtaining the failure information, the maintenance personnel is capable of repairing or replacing a failed equipment. Sending the failure information likewise can also be applied in a case that a PV component is sheltered, and the maintenance personnel are notified of clearing relevant shelter objects by sending the failure information.

Moreover, many solar light power generation systems are located at a scarcely-populated zone, an environment condition of which is relatively harsh, and the cost for maintaining the systems is high, so that when failed parts are up to a certain amount, or relatively serious, the maintenance personnel can go to the site to complete maintenance for all equipments for once according to the collected failure information. Specifically, a maintenance occasion can be selected according to a practical case.

### (3) Multiple branches of electric energy are connected in series into one branch to be output.

The case is generally applied in a faint light case when it is cloudy, rainy, early in the morning, or nightfall with relatively weaker sunlight. A single branch of PV components cannot output a required voltage or current, while if the backend energy converting unit needs to normally work, an input voltage thereof must achieve a certain value. Hence, when an output of the PV components is lower, the energy converting unit cannot normally work, that is, converts light energy into electric energy, so as to cause energy waste. At this time, several branches of PV components can be connected in series, so as to increase the output voltage, so that the energy converting unit can normally work.

During series connection, respective voltages of the multiple branches of electric energy are not very strictly required, and a better application situation is that multiple branches of voltages with similar amplitude values are connected in series to be output.

Referring to FIG. 6C, a left drawing is a schematic view during normal working of the system, and a right drawing is a schematic view in which the input multiple branches of electric energy are connected in series during faint light, so as to increase the output voltage.

The case that the multiple branches of electric energy are output as one branch can not only be applied in the faint light case, and in another case that the voltage characteristics need to be changed, multiple branches of electric energy is also connected in series as one branch to be output, so as to increase an output voltage.

It should be noted that the combination of the aforementioned several cases, may also be adjusted. For example, on the basis of the third case, if the output current further needs to be increased, several branches of PV components with the same voltage after series connection can be further connected in parallel, so as to increase the output current.

According to the embodiment of the present invention, the characteristics of the multiple branches of electric energy output by the solar cell array are detected in real time, and various dynamic adjustment manners such as combining multiple branches of electric energy with similar characteristics, cutting off output electric energy with a failure, and series-parallel connecting multiple branches of output electric energy (which can be one or a combination of several types) are performed according to the characteristics of the electric energy, so that the system is always running in a good working state.

The solar light power generation system according to the embodiment of the present invention further includes an energy converting unit 43.

The energy converting unit 43 is configured to receive the one or more branches of electric energy output by the combination control unit, perform energy converting, and output the converted electric energy.

The combination control unit adjusts combination of the output of the solar cell array, so as to output one or more branches of electric energy. In a normal working case, or in a shelter case, the combination control unit generally outputs multiple branches of electric energy; and in a faint light case that an output voltage and a current need to be increased, multiple branches can be connected in series or in parallel into one branch to be output.

The energy conversion includes such processing as DC-DC, DC-AC, and DC voltage stabilizing. When such conversion as DC-DC or DC-AC is performed, not only can a high voltage be converted into a low voltage, but also a low voltage can be converted into a high voltage.

When the energy converting unit performs energy converting, each branch can further perform the energy conversion in an Interleave manner, so as to increase an efficiency of the energy conversion. The performing the energy conversion in the Interleave manner is a technology well known by persons skilled in the art, and is not recited any more here.

The energy converting unit includes one or more converting modules, and each converting module includes one or more converting channels. The specific implementation manner generally can include the following several types.

### (1) The plurality of converting modules performs the energy conversion.

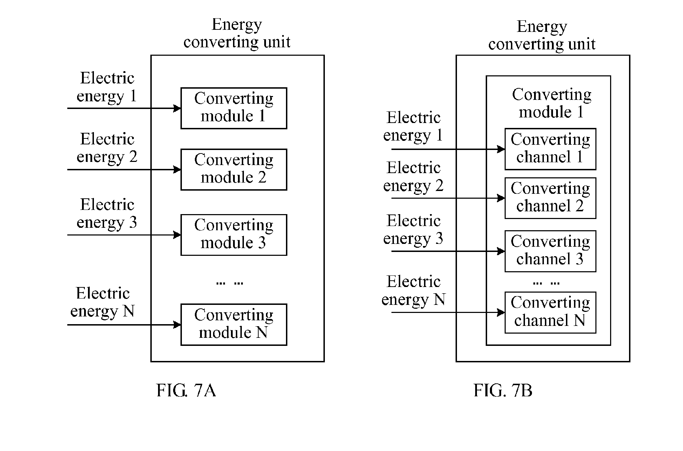

FIG. 7A is a schematic view in which the energy conversion is performed by adopting a plurality of single modules, and each module only has one converting channel. Power conversion capabilities of the plurality of converting modules can be the same, or can also be different. In an actual application, in order to better reduce power consumption, an asymmetric converting module configuration can be adopted, that is, a configuration method of combining large power converting modules and small power converting modules is adopted: a large power channel output after the combining of the combination control unit is connected with a large power converting module; a small power channel output after the combining of the combination control unit is connected with a small power converting module; and in certain application cases (such as a faint light case), it can be that, the large power converting module is not used, while only the small power converting module is used. A power consumed by the small power converting module itself is smaller than a power consumed by the large power converting module, so that when the large power converting module is switched off (or sleeps) while only the small power converting module is used, the power consumption of the system is reduced.

### (2) One converting module performs the energy conversion.

FIG. 7B is a schematic view of adopting one converting module to perform the energy conversion. The converting module integrally includes a plurality of energy converting channels, capability grades of performing the energy conversion by energy channels can be the same or can also be different, and a channel with a large channel energy conversion capability is connected with the large power channel output after the combining of the combination control unit. A channel with a small channel energy conversion capability is connected with the small power channel output after the combining of the combination control unit. Similar to the case that the plurality of converting modules performs the energy conversion, a power consumed by a converting channel with a small capability grade is small, so that, in certain application cases, it can be that, a converting channel with a large capability grade is not used, while only a converting channel with a small grade is used, so as to reduce the power consumption of the system.

### (3) The aforementioned two cases are combined.

The aforementioned two cases can be combined. For example, two modules are adopted. One is a single module, and the other is a converting module with a plurality of converting channels.

In the several cases, when converting channels (or modules) with different conversion capabilities exist, electric energy to be converted can be allocated in a proportion according to levels of the conversion capabilities, so that the system load is more balanced. Meanwhile, when the electric energy to be converted is less, one or more converting modules or converting channels without the necessity for participating conversion can be switched off, so as to reduce the power consumption of the system. When the converting modules or converting channels are switched off, under a precondition that two converting modules or converting channels are capable of satisfying the conversion, the converting module or the converting channel consuming a large power (which is generally a converting module or converting channel with a strong conversion capability) can be switched off.

### Embodiment 3

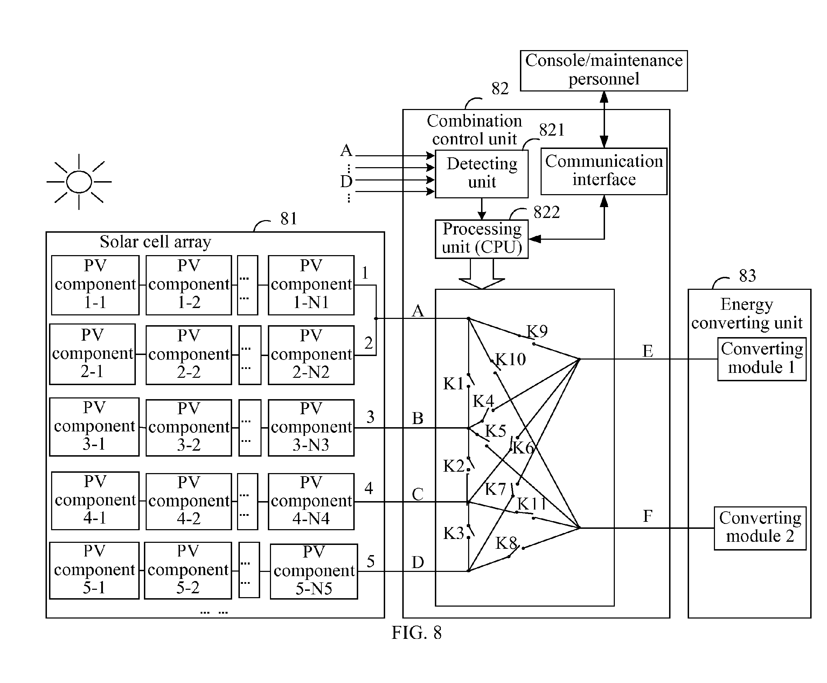

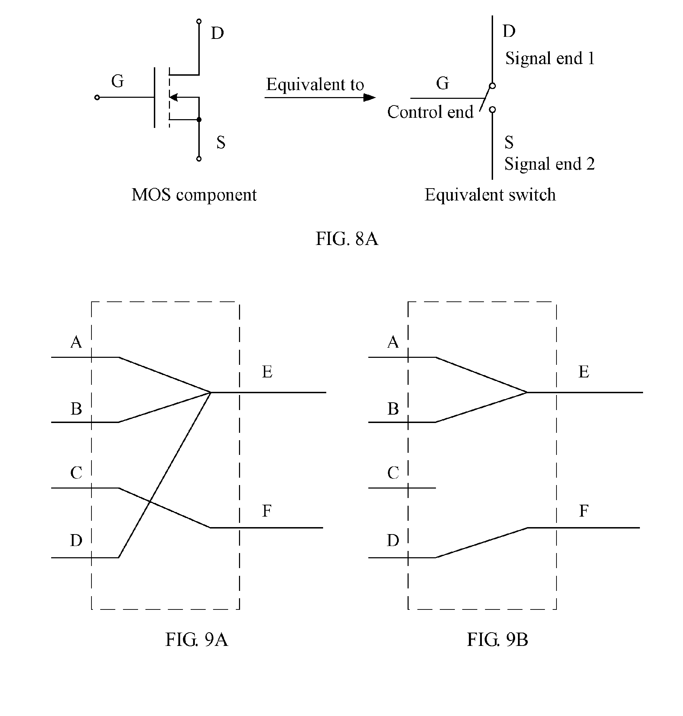

Referring to FIG. 8, based on Embodiment 2, the embodiment of the present invention provides a solar light power generation system, which includes a solar cell array 81, a combination control unit 82, and an energy converting unit 83.

The solar cell array 81 is formed by a plurality of series-parallel connection PV components. A structure of the PV component is introduced in the background of the invention, and is not recited any more here. If the plurality of PV components is connected in series, the output voltage can be increased; and if the plurality of PV components is connected in parallel, the output current can be increased. At the time of parallel connection, a single PV component (or a plurality of PV components after being connected in series) having similar voltage characteristics should be selected to be connected in parallel. If a difference between two branches of voltage characteristics connected in parallel with each other is larger, an entire circuit performance after parallel connection is reduced.

Referring to FIG. 8, in the embodiments of the present invention, the solar cell array 81 is formed by multiple branches of PV components after being connected in series. PV components 1-1 to 1-N1 denote a first branch, PV components 2-1 to 2-N2 denote a second branch, and the rest several branches are denoted in a similar method. In the drawing, five branches of PV components connected in series are shown. In a practical application, the amount of PV components is not limited, and the amount of PV component output branches can be increased or reduced according to an application demand. Moreover, in order to make the drawing more concise and clearer, in the embodiments of the present invention, the method that a positive line segment and a negative line segment are configured to denote output electric energy in FIG. 2 is changed into a method of denoting positive and negative with one line segment. It should be understood that, persons skilled in the art can correctly connect a practical circuit according to the denoting method.

For PV components connected in series, the amount of the PV components connected in series in each branch is not fixed, and a certain amount of PV components can be connected in series according to a requirement of the system on the output voltage. For example, it is assumed that each PV component outputs a voltage of 20V, if a voltage of 100V needs to be output, five PV components can be connected in series; and if a voltage of 40 V needs to be output, only two PV components need to be connected in series.

In an actual application, particularly during a large-scale power generation application, for ease of management and maintenance, numbers of PV components connected in series in branches are generally the same. Referring to FIG. 8, in the embodiments of the present invention, it is assumed that five branches of PV components connected in series are provided totally, and each branch of output is formed by PV components connected in series with the same type and the same amount. In order to increase the output current, the first branch and the second branch are connected in parallel, and then are output. In this way, totally four branches of electric energy are finally output to the combination control unit, which are branches A, B, C, and D respectively. The branch A is obtained after the first branch and the second branch are connected in parallel, the branch B corresponds to the third branch, the branch C corresponds to the fourth branch, and the branch D corresponds to the fifth branch.

Referring to FIG. 7, according to the embodiment of the present invention, the combination control unit 82 includes a detecting unit 821, a processing unit 822, and a plurality of switch units K1 to K11. The combination control unit receives four branches (branches A, B, C, and D) of electric energy output by the solar cell array, and outputs two branches (branches E and F) of electric energy to the energy converting unit after dynamically combining and controlling the four branches of electric energy.

The input four branches of electric energy form one combining and switching network through the plurality of switch units K1 to K11, so that the multiple branches of electric energy are capable of forming various series-parallel connection combinations, so that the inputs of electric energy are dynamically adjusted. K1, K2, and K3 are configured to set whether two adjacent branches of input electric energy are connected in series, and K4 to K1 are configured to set whether each branch of input electric energy is input to a corresponding output end (E and F).

Specifically, each switch unit can be completed by adopting such parts having a switch effect as an MOS tube, an IGBT, and a relay. Referring to FIG. 8A, taking the MOS tube as a switch component as an example, a left drawing is a schematic view of an MOS component, which includes a gate (G), a drain (D), and a source (S); and a right drawing is a schematic view in which the MOS component is equivalent into one switch. The MOS regards the gate (G) of the MOS tube as a control end, and regards the drain (D) and the source (S) as two signal ends, and the MOS tube is used as a switch part.

The switch part needs to select a matched part according to system characteristics. Moreover, some additional circuits (such as a driving circuit and a protection circuit) can be further added to satisfy a performance required by the system.

According to the embodiment of the present invention, in the procedure of performing the dynamic adjustment, firstly, characteristics of the input electric energy are detected by the detecting unit (for example, it is determined whether such cases as shelter, short circuit, and open circuit occur according to values of a voltage and a current); and then the processing unit combines and adjusts combination of the inputs of electric energy according to the detected result obtained by the detecting unit, which includes the following cases.

### (1) Several branches of output electric energy with similar characteristics are connected in parallel as one branch to be output.

For example, when the branch C is sheltered, in this way, its output characteristics are dissimilar to those of the branches A, B, and D during normal working (the voltage and the current are apparently reduced), and at this time, the branch C can be separately output as one branch; and electric energy of the rest several branches during normal working is output as another branch. For example, if the branch C is output through the branch F, and the branches A, B, and D are output through the branch E (parallel connection), states of switch units can be controlled as follows.

K1, K2, K3, K5, K6, and K8 are switched on.

K4, K7, K9, K10, and K11 are switched off.

A finally formed equivalent circuit diagram is as shown in FIG. 9A, that is, the branches A, B, and D are connected in parallel and then connected to the branch E; and the branch C is separately connected to the branch F. The electric energy of similar performance is output as one branch, so as to reduce an influence on the entire system caused by a branch of electric energy with a worse performance. For example, it is assumed that three branches of electric energy are totally provided currently, which output 100 W during normal working, and electric energy of 300 W can be output totally. At this time, if a branch thereof is sheltered, an output of the entire system is influenced. Here, it is assumed that 50% performance reduction of the entire system is caused, and finally output electric energy is 300 W * (1 - 50%) = 150 W totally. In order to reduce the influence on the system caused by the electric energy with the shelter occurring, the electric energy with shelter problem can be output separately as another branch, while two original branches are still output as one branch. At this time, the totally output electric energy is 200W (electric energy of two branches during normal working) + 100 * (1 - 50%) = 250W (the electric energy with the shelter occurring). Apparently, after the adjustment, more electric energy can be output.

### (2) One branch with a failure is disconnected from the combination control unit.

For example, when the branch C is failed and needs to be disconnected, all the switches associated with the branch C can be disconnected, such as in the embodiment of the present invention, the branch C is disconnected. Meanwhile, the branches A and B are connected in parallel and then connected to the branch E, the branch D is separately connected to the branch F, and states of switch units can be controlled as follows.

K1, K2, K3, K5, K6, K7, K10, and K11 are switched on.

K4, K8, and K9 are switched off.

A finally formed equivalent circuit diagram is as shown in FIG. 9B, that is, the branch C is disconnected, the branches A and B are connected in parallel and then connected to the branch E, and the branch D is separately connected to the branch F. After a failure is found, the processing unit can further notify a console or maintenance personnel of updating equipment through a communication interface 723 (including wired and wireless manners); meanwhile, the processing unit can also receive an instruction from the console or the maintenance personnel, so as to combine and adjust various input electric energy.

### (3) Multiple branches of electric energy are connected in series as one branch to be output.

For example, in a case of early morning or nightfall with relatively weaker sunlight, several branches can be connected in series to be output, so as to increase the output voltage.

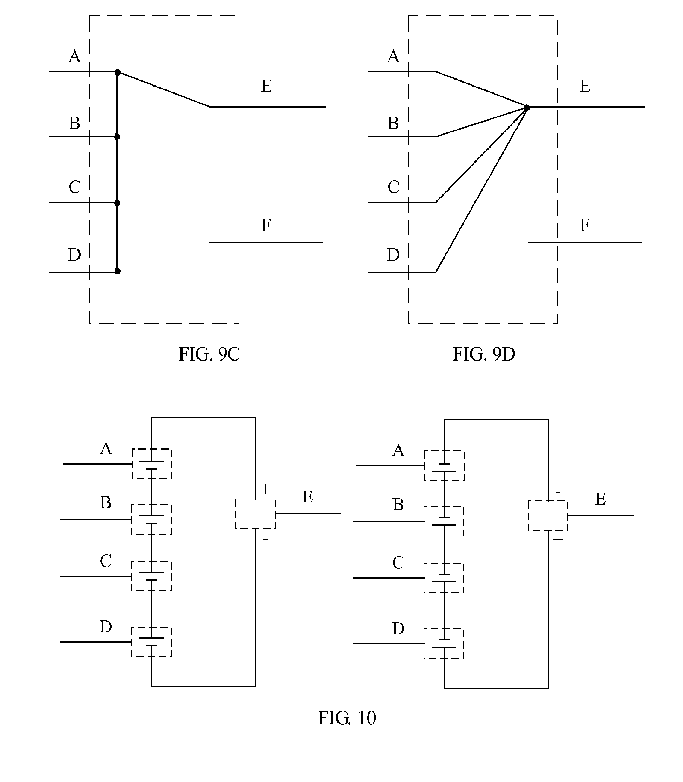

FIG. 9C is a schematic view in which the branches A, B, C, and D are connected in series to be output. At this time, switch states of switch units controlled by the processing unit are as follows.

K4, K5, K6, K7, K8, K10, and K11 are switched on.

K1, K2, K3, and K9 are switched off.

The switch states of the switch units are set, so that the branches A, B, C, and D can be connected in series to be output, and an output voltage is equal to a sum of voltages of branches. According to the embodiment of the present invention, in the schematic view, one branch of electric energy (including a positive pole and a negative pole) is simplified to be denoted with one line segment, so that the positive and negative poles of a power supply are not denoted. It can be understood that, according to different definitions of polarity, it can also be considered that, after K9 is switched on and K7 is switched off, output is performed. Referring to FIG. 10, a case of the aforementioned two different polarities can be denoted. A left drawing in FIG. 10 is equivalent to an application case that K9 is switched off and K7 is switched on in the branch A; and a right drawing in FIG. 10 is equivalent to an application case that K9 is switched on and K7 is switched off. In an actual application, connection and setting of the positive and negative poles of the power supply fall within a technology well known by persons skilled in the art, and are not recited any more here.

Moreover, all electric energy can also be connected in parallel into one branch to be output. In order to guarantee an output performance, characteristics of all electric energy must be similar, and the case can also be treated as one particular case in the case of FIG. 9A. FIG. 9D is a schematic view in which the branches A, B, C, and D are all connected in parallel to be output. At this time, switch states of switch units controlled by the processing unit are as follows.

K1, K2, K3, K5, K8, K10, and K11 are switched on.

K4, K6, K7, and K9 are switched off;

The switch states of the switch units are set, and all input electric energy is connected in parallel and output to the branch E, so that a working current input to the branch E can be increased.

In an actual application, not all input electric energy needs to be connected in series or in parallel every time, but several branches capable of satisfying a system parameter requirement are selected to be connected in series or in parallel according to the system parameter requirement. For example, only two branches or three branches are connected in series or in parallel.

Meanwhile, specific operations of the several cases can refer to introduction associated with the combination control unit in Embodiment 2, and are not recited any more here.

Moreover, the detection and the adjustment are performed in real time, such as once every other 1 second or 2 seconds. Through detecting in real time and adjusting combination of the branches of input electric energy, a response can be made timely for a case that a problem occurs.

According to the embodiment of the present invention, the characteristics of the multiple branches of electric energy output by the solar cell array are detected in real time, and multiple branches of electric energy with similar characteristics are combined and output electric energy with a failure is cut off according to the electric energy characteristics, so that an influence on the entire system due to problems that a certain branch is sheltered or is failed can be avoided. Multiple branches of electric energy are connected in series or in parallel into one branch to be output, so that electric energy required by the energy converting unit is also capable of being output in insufficient lighting situations as when it is cloudy, rainy, early in the morning, or nightfall, so as to increase an light energy utilizing efficiency, and increase an electric energy yield.

The solar light power generation system according to the embodiment of the present invention further includes an energy converting unit 73.

The energy converting unit 73 is configured to receive one or more branches of electric energy of the combination control unit, perform energy converting, and output the converted electric energy.

A converting module of the energy converting unit completes DC-DC and DC-AC energy conversion by adopt various existing or unknown energy conversion modules, and outputs the converted electric energy to a power-consuming unit.

Specifically, as introduced in Embodiment 2, the energy converting unit can realize the energy conversion through a plurality of converting modules or a converting module having a plurality of converting channels, or can also realize the energy conversion by combining the two manners.

Referring to FIG. 7, according to the embodiment of the present invention, two converting modules are adopted to realize the energy conversion, and conversion capabilities of the two converting modules are not the same, but a conversion capability of one converting module is preferably larger than the largest output of the solar cell array. In this way, even when the other converting module does not work, energy conversion of electric energy output by the solar cell array is also capable of be realized. During normal working, the two modules are generally not in a full load working state, but electric energy to be converted is allocated in a fixed proportion. Specifically, a converting module with a strong conversion capability is connected with electric energy with a large power output by the combination control unit (occupying a large proportion of the electric energy to be converted), and a converting module with a weak conversion capability is connected with electric energy with a small power output by the combination control unit (occupying a small proportion of the electric energy to be converted), so that the system load can be more balanced.

For example, the largest conversion power of a first converting module is 2000 W, while the largest conversion power of a second converting module is 1000 W, and the electric energy to be converted is allocated to the two modules in a proportion of 7:3. It is assumed that, during normal working of the system, the solar cell array is capable of outputting 1800 W, the first converting module converts 7/10 of 1800W, and the second converting module converts 3/10 of 1800 W.

In another case, if the electric energy to be converted by the system is less (such as in a cloudy and rainy day, early morning, and nightfall), a branch thereof can be switched off (or sleep), so as to reduce the power consumption of the system. For example, when the electric energy to be converted is only 800 W, the first converting module can be switched off, while only the second converting module works; and if the electric energy to be converted is 1200 W, the second converting module can be switched off, while only the converting module 1 is configured to work (in this case, the two converting modules can also work together).

### Embodiment 4

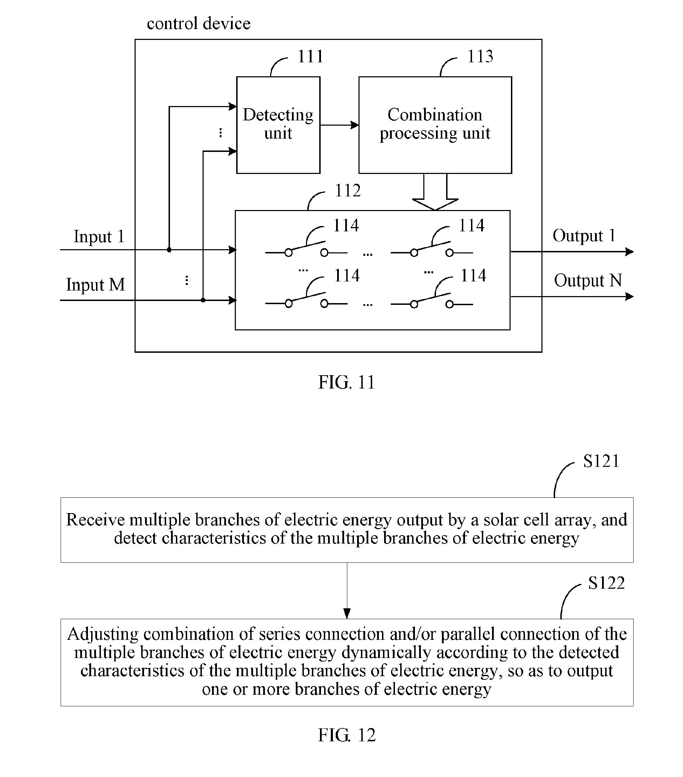

The embodiment of the present invention provides a control device of a solar light power generation system. Referring to FIG. 11, the control device includes a detecting unit 111, a switch module 112, and a combination processing unit 113.

The detecting unit 111 is configured to receive multiple branches of electric energy output by a solar cell array, and detect characteristics of the multiple branches of electric energy.

The switch module 112 is configured to combine the series-parallel connections of multiple branches of electric energy.

The combination processing unit 113 is configured to control the switch module to adjust combination of series connection and/or parallel connection of the multiple branches of electric energy dynamically according to the characteristics of the multiple branches of electric energy detected by the detecting unit, so as to output one or more branches of electric energy.

When the combination processing unit 113 adjusts combination of the series connection and/or parallel connection of the multiple branches of electric energy dynamically, so as to output one or more branches of electric energy, at least one of the following exists.

Multiple branches of electric energy of similar performance are connected in parallel into one branch to be output.

Alternatively, an electric energy output with a failure is cut off.

Alternatively, multiple branches of electric energy are connected in series into one branch to be output.

The characteristics of the multiple branches of electric energy detected by the detecting unit include a voltage and a current of electric energy. Voltages or currents within a certain error range can be considered to be similar. If a voltage of a certain branch of electric energy is seriously reduced, the branch of electric energy can be considered to be failed. The detecting unit detects the characteristics of the electric energy in real time, so that a response to the failure can be made as fast as possible. The combination processing unit can obtain the characteristics of the branches of electric energy actively, or obtain the characteristics by receiving a report of the detecting unit.

In the embodiment of the present invention, the switch module 112 includes a plurality of switch units 114, configured to combine the multiple branches of electric energy through series-parallel connection, so that the multiple branches of electric energy can be capable of increasing an output voltage through series connection, and also be capable of increasing an output current through parallel connection. A switch unit can adopt such parts having switch characteristics as an MOS tube, an IGBT part, and a controllable relay, details can refer to the description of the switch unit in the embodiment, and are not recited any more here.

The combination processing unit obtains the characteristics of the multiple branches of electric energy detected by the detecting unit, and adjusts combination of series connection and/or parallel connection of the multiple branches of electric energy dynamically specifically by controlling on or off of a plurality of switch units, which specifically may include at least one of the following application situation.

In a case that a solar cell is sheltered, a branch or several branches being sheltered cause a performance of an entire branch or even the entire system to be reduced, so that the combination processing unit can connect one or more sheltered branches of electric energy in parallel into one branch to be output, and the rest electric energy in normal working is connected in parallel as another branch to be output.

Or, when such failures as short circuit, open circuit, and a seriously insufficient voltage or current occur, the combination processing unit can control a switch unit to isolate electric energy with a failure from the output, so as to avoid an influence on the performance of the entire system.

Or, when a single branch cannot output a sufficient voltage when it is cloudy and rainy, daybreak, or nightfall with weaker lighting, the combination processing unit can connect the multiple branches of electric energy in series, so as to output a required voltage.

The dynamic adjustment is performed in real time, specific interval time can be set smaller (such as 1 second or 2 seconds), so as to timely make a response to a state occurring in the system.

According to the embodiment of the present invention, various characteristics of the electric energy are detected, and the dynamic adjustment is performed in one of or several cases, so that the entire system can avoid a case of reducing the performance of the entire system due to a problem occurring for a certain branch or several branches of output electric energy. Meanwhile, at the time of weaker light ray, the multiple branches of electric energy are connected in series to be output, so as to increase the output voltage and satisfy a demand of the system on the voltage.

The solar light power generation system according to the embodiment of the present invention can exist in a single equipment form, or in order to be compatible with existing equipment, the solar light power generation system can also be designed to be located in a line collecting box of an existing solar light power generation system.

### Embodiment 5

The embodiment of the present invention provides a control method of a solar light power generation system. Referring to FIG. 12, the control method includes the following steps.

S121: receiving multiple branches of electric energy output by a solar cell array, and detecting characteristics of the multiple branches of electric energy;

S122: adjusting combination of series connection and/or parallel connection of the multiple branches of electric energy dynamically according to the detected characteristics of the multiple branches of electric energy, so as to output one or more branches of electric energy.

The process that adjusting combination of series connection and/or parallel connection of the multiple branches of electric energy dynamically according to the detected characteristics of the multiple branches of electric energy, so as to output one or more branches of electric energy includes at least one of the following:
electric energy of similar performance is connected in parallel into one branch to be output;
an electric energy output with a failure is cut off; or
multiple branches of electric energy are connected in series as one branch to be output.

In the embodiment of the present invention, the detecting the characteristics of the multiple branches of electric energy includes detecting a voltage and a current of the electric energy. Voltages or currents within a certain error range can be considered to be similar. If a voltage of a certain branch of electric energy is seriously reduced, the branch of electric energy can be considered to be failed. Meanwhile, the characteristics of the electric energy are detected in real time, so that a response to the failure can be made as fast as possible.

The combination of series connection and/or parallel connection of the multiple branches of electric energy are dynamically adjusted by switching a plurality of switch units in a switch module, the plurality of switch units in the plurality of switch module is configured to combine outputs of the solar cell array through series-parallel connection, so that the multiple branches of electric energy can be capable of increasing an output voltage through series connection, and also be capable of increasing an output current through parallel connection. A switch unit can adopt such parts having switch characteristics as an MOS tube, an IGBT part, and a controllable relay.

The combination of series connection and/or parallel connection of the multiple branches of electric energy are dynamically adjusted by switching a plurality of switch units in a switch module "on" or "off", which includes at least one of the following application situations.

In a case that a solar cell is sheltered, a branch or several branches being sheltered cause a performance of an entire branch or even the entire system to be reduced, so that several branches of sheltered electric energy can be connected in parallel into one branch to be output, and the rest electric energy in normal working is connected in parallel as another branch to be output.

Or, when such failures as short circuit, open circuit, and a seriously insufficient voltage or current occur, a switch unit can be controlled to isolate electric energy with a failure from the output, so as to avoid an influence on the performance of the entire system.

Or, when a single branch cannot output a sufficient voltage when it is cloudy and rainy, daybreak, or nightfall with weaker lighting, the multiple branches of electric energy can be connected in series, so as to output a required voltage.

According to the embodiment of the present invention, various characteristics of the electric energy are obtained in real time, and the dynamic adjustment is performed for one or several cases timely, so that the entire system can avoid a case of reducing the performance of the entire system due to a problem occurring for a certain branch or several branches of output electric energy. Meanwhile, at the time of weaker light ray, the multiple branches of electric energy are connected in series to be output, so as to increase the output voltage and satisfy a demand of the system on the voltage.

The control method can be realized based on the system or equipment in the embodiment, or can also be realized by adopting a hardware entity having similar functions.

Persons having ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, an optical disk, a read-only memory (ROM), or a random access memory (RAM).

In the preferable embodiments, purposes, technical solutions, and advantages of the present invention are further illustrated in detail. It should be understood that, the above descriptions are merely preferred embodiments of the present invention, but not intended to limit the scope of the present invention. Any modification, equivalent replacement, or improvement made without departing from the principle of the present invention should fall within the scope of the present invention.

## Claims

1. A solar light power generation system, comprising:
a solar cell array, configured to output multiple branches of electric energy;
a combination control unit, configured to receive the multiple branches of electric energy output by the solar cell array, detect output characteristics of the multiple branches of electric energy, and adjust combination of series connection and/or parallel connection of the multiple branches of electric energy dynamically according to the output characteristics, so as to output one or more branches of electric energy; and
an energy converting unit, configured to receive the one or more branches of electric energy output by the combination control unit, perform energy converting, and output the converted electric energy.

2. The solar light power generation system according to claim 1, wherein
the output of each branch of the solar cell array is output by a plurality of photovoltaic (PV) components connected in series, or is output by a plurality of groups of PV components connected in series after parallel connection.

3. The solar light power generation system according to claim 1, wherein the process that the combination control unit adjust combination of series connection and/or parallel connection of the multiple branches of electric energy dynamically according to the output characteristics, so as to output one or more branches of electric energy, comprises at least one of the following:
multiple branches of electric energy of similar performance are connected in parallel into one branch to be output;
an electric energy output with a failure is cut off; or
multiple branches of electric energy are connected in series into one branch to be output.

4. The solar light power generation system according to claim 1, wherein the combination control unit comprises:
a detecting unit, configured to receive the multiple branches of electric energy output by the solar cell array, and detect characteristics of the multiple branches of electric energy;
a switch module, configured to combine the series-parallel connections of multiple branches of electric energy; and
a processing unit, configured to control the switch module to adjust combination of series connection and/or parallel connection of the multiple branches of electric energy dynamically according to the output characteristics of the multiple branches of electric energy detected by the detecting unit, so as to output one or more branches of electric energy.

5. The solar light power generation system according to claim 4, wherein
the switch module comprises a plurality of switch units, and the switch unit is a Metal Oxide Semiconductor (MOS) tube, or an Insulated Gate Bipolar Transistor (IGBT) component, or a controllable relay.

6. The solar light power generation system according to claim 1, wherein
the energy converting unit comprises one or more converting modules, and each converting module comprises one or more converting channels; and
the electric energy to be converted is allocated in a fixed proportion according to a conversion capability of each converting module or converting channel.

7. The solar light power generation system according to claim 6, wherein
when the electric energy to be converted is less, one or more converting modules or converting channels without the necessity for participating conversion are switched off.

8. A control device of a solar light power generation system, configured to control a solar cell array to output electric energy, the control device comprising:
a detecting unit, configured to receive multiple branches of electric energy output by the solar cell array, and detect characteristics of the multiple branches of electric energy;
a switch module, configured to combine the series-parallel connections of multiple branches of electric energy; and
a combination processing unit, configured to control the switch module to adjust combination of series connection and/or parallel connection of the multiple branches of electric energy dynamically according to the characteristics of the multiple branches of electric energy detected by the detecting unit, so as to output one or more branches of electric energy.

9. The control device according to claim 8, wherein the process that the combination processing unit adjusts combination of series connection and/or parallel connection of the multiple branches of electric energy dynamically, so as to output one or more branches of electric energy, comprises at least one of the following:
multiple branches of electric energy of similar performance are connected in parallel into one branch to be output;
an electric energy output with a failure is cut off; or
multiple branches of electric energy are connected in series into one branch to be output.

10. The control device according to claim 8, wherein
the switch module comprises a plurality of switch units, and the switch unit is a Metal Oxide Semiconductor (MOS) tube, or an Insulated Gate Bipolar Transistor (IGBT) component, or a controllable relay.

11. A control method of a solar light power generation system, comprising:
receiving multiple branches of electric energy output by a solar cell array, and detecting characteristics of the multiple branches of electric energy; and
adjusting combination of series connection and/or parallel connection of the multiple branches of electric energy dynamically according to the detected characteristics of the multiple branches of electric energy, so as to output one or more branches of electric energy.

12. The control method according to claim 11, wherein the adjusting combination of series connection and/or parallel connection of the multiple branches of electric energy dynamically according to the detected characteristics of the multiple branches of electric energy, so as to output one or more branches of electric energy, comprises at least one of:
connecting multiple branches of electric energy of similar performance in parallel into one branch to be output;
cutting off an electric energy output with a failure; or
connecting multiple branches of electric energy in series into one branch to be output.

13. The control method according to claim 11, wherein the adjusting combination of series connection and/or parallel connection of the multiple branches of electric energy dynamically according to the detected characteristics of the multiple branches of electric energy, so as to output one or more branches of electric energy, comprises:
adjusting combination of series connection and/or parallel connection of the multiple branches of electric energy dynamically by switching a plurality of switch units in a switch module, wherein the plurality of switch units in the switch module is configured to combine the series-parallel connections of the outputs of a solar cell array.

14. The control method according to claim 13, wherein
the switch unit is a Metal Oxide Semiconductor (MOS) tube, or an Insulated Gate Bipolar Transistor (IGBT) component, or a controllable relay.
